# EUROPÄISCHE PATENTSCHRIFT

(11) **EP 1 795 444 B1**
(45) Veröffentlichungstag und Bekanntmachung des Hinweises auf die Patenterteilung: **31.07.2013**
(21) Anmeldenummer: 06018807.5
(22) Anmeldetag: 08.09.2006
(51) Int. Cl.: B64D 11/06, B60N 2/015, B60N 2/68, B60N 2/24

(54) **Sitzstützvorrichtung**
Supporting device for a seat
Dispositif de support pour siége

(30) Priorität: 10.12.2005 DE 102005059134
(43) Veröffentlichungstag der Anmeldung: 13.06.2007
(73) Patentinhaber: Recaro Aircraft Seating GmbH & Co. KG, 74523 Schwäbisch Hall (DE)
(72) Erfinder: Baumann, Jürgen, 78351 Ludwigshafen-Bodman (DE)
(74) Vertreter: Daub, Thomas

(56) Entgegenhaltungen:
- WO-A1-91/07315
- GB-A- 886 691
- GB-A- 2 232 584
- US-A- 3 785 600
- US-A- 4 498 649

## Beschreibung

### Stand der Technik

Aus der US 6,672,661 B2 ist eine Sitzstützvorrichtung zur Abstützung bzw. zur Befestigung von Flugzeugsitzen in einem Flugzeug bekannt, die in Sitzrichtung zwei hintereinander angeordnete rohrförmige Sitztragbalkeneinheiten aufweist. Die Sitztragbalkeneinheiten sind quer zur Sitzrichtung ausgerichtet und sind in runde Ausnehmungen von Ständerbeinen eingefügt.

Aus der GB 886 691 A ist eine Sitzstützvorrichtung mit einer Sitztragbalkeneinheit, an der zwei Kraftaufnahmeelemente durch Nieten befestigt sind, bekannt. Mit den beiden Kraftaufnahmeelementen ist jeweils ein Ständerbein einer Ständerbeinvorrichtung gelenkig verbunden, wobei sich Längsachsen der Ständerbeine in einem Schnittpunkt oberhalb einer Deckseite der Sitztragbalkeneinheit schneiden. Bei Einwirken eines Drehmoments auf die Sitztragbalkeneinheit wird das Drehmoment aufgrund der festen Kopplung durch die Nieten von der Sitztragbalkeneinheit auf die Kraftaufnahmeelemente übertragen. Durch die bewegliche Verbindung der Ständerbeine mit den Kraftaufnahmeelementen wird das auf die Kraftaufnahmeelemente übertragene Drehmoment in Axialkräfte überführt, welche über die Ständerbeine abgestützt werden können.

Der Erfindung liegt insbesondere die Aufgabe zugrunde, eine besonders Platz sparende, für auftretende Belastungen vorteilhaft geeignete Sitzstützvorrichtung bereitzustellen. Sie wird gemäß der Erfindung durch die Merkmale des Anspruchs 1 gelöst. Weitere Ausgestaltungen ergeben sich aus den Unteransprüchen und Nebenansprüchen.

### Vorteile der Erfindung

Durch eine Ausgestaltung entsprechend dem Patentanspruch 1 kann vorteilhaft eine besonders Platz sparende Sitzstützvorrichtung mit einer einzelnen Sitztragbalkeneinheit geschaffen werden. Vorteilhaft ist die Sitztragbalkeneinheit in Sitzrichtung im mittleren Bereich eines Sitzbereichs angeordnet. Die Erfindung geht von der Erkenntnis aus, dass bei einer entsprechenden Anordnung, insbesondere bei einer positiven oder bei einer negativen Beschleunigung in Sitzrichtung über die Sitztragbalkeneinheit, ein Drehmoment abgestützt werden muss. Das Drehmoment ergibt sich dabei im Wesentlichen aus einer Massenträgheitskraft einer Gewichtskraft eines Passagiers oder mehrerer nebeneinander sitzender Passagiere mal einem Hebelarm zwischen einem sich oberhalb der Deckseite der Sitztragbalkeneinheit befindlichen Massenschwerpunkt des bzw. der Passagiere und der Sitztragbalkeneinheit. Mittels der erfindungsgemäßen Kraftaufnahmeelemente können durch das Drehmoment bedingte Biegekräfte innerhalb der Sitztragbalkeneinheit zumindest weitgehend vermieden werden bzw. kann das Drehmoment zumindest weitgehend in den Kraftaufnahmeelementen über Axialkräfte abgestützt werden, und zwar insbesondere, wenn - in der Einbaulage betrachtet - der Schnittpunkt der Längsachsen der Kraftaufnahmeelemente einen Vertikalabstand zur Deckseite der Sitztragbalkeneinheit kleiner 150 cm aufweist bzw. sich der Schnittpunkt in vertikaler Richtung möglichst nahe an einem sich in der Regel einstellenden Massenschwerpunkt befindet. Ferner kann bei einer entsprechenden Ausrichtung der Kraftaufnahmeelemente ein vorteilhafter Kräfteausgleich in der Sitztragbalkeneinheit erzielt werden.

Die Kraftaufnahmeelemente können dabei von verschieden ausgeführten, dem Fachmann als sinnvoll erscheinenden Elementen gebildet sein, wie beispielsweise auf ein Hohlprofil aufgebrachten Elementen, von Hohlprofilwandungen und/oder von in einem Hohlprofil eingebrachten Elementen. Besonders vorteilhaft ist jedoch wenigstens ein Kraftaufnahmeelement zu einer Außenseite der Sitztragbalkeneinheit überstehend ausgeführt, wodurch eine besonders vorteilhafte, konstruktiv einfache Anbindung von zwei Seiten eines an die Sitztragbalkeneinheit anschließenden Bauteils erreicht werden kann.

In einer weiteren Ausgestaltung der Erfindung wird vorgeschlagen, dass wenigstens ein Kraftaufnahmeelement über eine Unterseite der Sitztragbalkeneinheit überstehend ausgeführt ist, wodurch insbesondere Ständerbeine vorteilhaft an die Sitztragbalkeneinheit angebunden werden können. Grundsätzlich können Kraftaufnahmeelemente jedoch auch über die Deckseite der Sitztragbalkeneinheit überstehend ausgeführt sein, beispielsweise zur Befestigung von Armlehnenbaueinheiten.

Die Kraftaufnahmeelemente können von zusätzlichen, an einem Grundkörperelement der Sitztragbalkeneinheit befestigten Bauteilen gebildet sein. Vorteilhaft ist jedoch wenigstens ein Kraftaufnahmeelement zumindest teilweise einstückig an ein Grundkörperelement der Sitztragbalkeneinheit angeformt, wodurch zusätzliche Bauteile, Bauteileschnittstellen, Montageaufwand und Kosten reduziert werden können. Dabei soll unter einem "Grundkörperelement der Sitztragbalkeneinheit" insbesondere ein Element verstanden werden, welches sich zumindest über 20%, vorzugsweise über 40% und besonders bevorzugt über 50% einer Gesamtlänge der Sitztragbalkeneinheit erstreckt. Ferner wird vorgeschlagen, dass die Sitztragbalkeneinheit wenigstens eine für einen Formschluss vorgesehene Ausformung aufweist. Dabei soll unter einer "Ausformung" insbesondere eine Nut und/oder ein Fortsatz verstanden werden. Durch eine entsprechende Ausgestaltung können zusätzlich wirkende Kräfte vorteilhaft abgestützt werden und es kann eine besonders sichere Verbindung mit einem angrenzenden Bauteil erreicht werden.

Vorzugsweise ist die Sitztragbalkeneinheit zumindest teilweise von einem Hohlprofil gebildet, wodurch eine besonders leichte Konstruktion erzielt werden kann, die dennoch zur Aufnahme großer Kräfte geeignet ist. Die Sitztragbalkeneinheit kann dabei über ihre Längserstreckung unterschiedliche Profilformen aufweisen, insbesondere kann die Sitztragbalkeneinheit in einzelnen Bereichen zumindest im Wesentlichen zylinderförmig ausgebildet sein, so dass in diesen Bereichen eine besonders vorteilhafte Drehmomentübertragung in Längsrichtung der Sitztragbalkeneinheit erreicht werden kann.

Ist innerhalb des Hohlprofils zumindest ein Versteifungsmittel angeordnet, können vorteilhaft Ausbeulungen im Belastungsfall zumindest weitgehend vermieden werden. Dabei sind sämtliche, dem Fachmann als sinnvoll erscheinende Versteifungsmittel denkbar. Besonders vorteilhaft eignen sich jedoch quer zur Längserstreckung der Sitztragbalkeneinheit ausgerichtete, zwischenwandartige Mittel.

Ist die Sitztragbalkeneinheit von wenigstens zwei Grundkörperelementen gebildet, können gegenüber einer Sitztragbalkeneinheit mit nur einem einzelnen Grundkörperelement größere Gestaltungsfreiräume geschaffen werden. Dabei kann die Sitztragbalkeneinheit quer zur Längsrichtung und/oder vorteilhaft in Längsrichtung geteilt ausgebildet sein.

Weist wenigstens ein Grundkörperelement der Sitztragbalkeneinheit unterschiedlich große Materialwandstärken auf, können vorteilhaft unterschiedlich großen Belastungen unterschiedlich große Materialwandstärken zugeordnet werden.

In einer weiteren Ausgestaltung der Erfindung wird vorgeschlagen, dass die Sitztragbalkeneinheit zumindest teilweise aus einem Faserwerkstoff, wie besonders vorteilhaft aus einem kohlefaserverstärkten Kunststoff (CFK), gebildet ist, wodurch eine besonders leichte Konstruktion erreicht werden kann. Alternativ bietet sich vorteilhaft Aluminium an.

Ist die Sitztragbalkeneinheit durch mehrere Einlegematten hergestellt, können besonders einfach die Materialwandstärken und insbesondere auch die Faserausrichtungen an unterschiedliche Belastungen angepasst werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:
- Fig. 1: einen Ausschnitt einer Sitzstützvorrichtung mit einer Sitztragbalkeneinheit schräg von oben,
- Fig. 2: die Sitztragbalkeneinheit in Alleinstellung schräg von oben,
- Fig. 3: die Sitztragbalkeneinheit in einer Seitenansicht,
- Fig. 4: die Sitztragbalkeneinheit in einer Ansicht von oben,
- Fig. 5: eine Ansicht in Richtung V in Figur 3,
- Fig. 6: einen Schnitt entlang der Linie VI - VI in Figur 3,
- Fig. 7: einen Schnitt entlang der Linie VII - VII in Figur 3,
- Fig. 8: einen ersten Teil der Sitztragbalkeneinheit aus Figur 1 bei der Herstellung und
- Fig. 9: einen zweiten Teil der Sitztragbalkeneinheit aus Figur 1 bei der Herstellung.

### Beschreibung des Ausführungsbeispiels

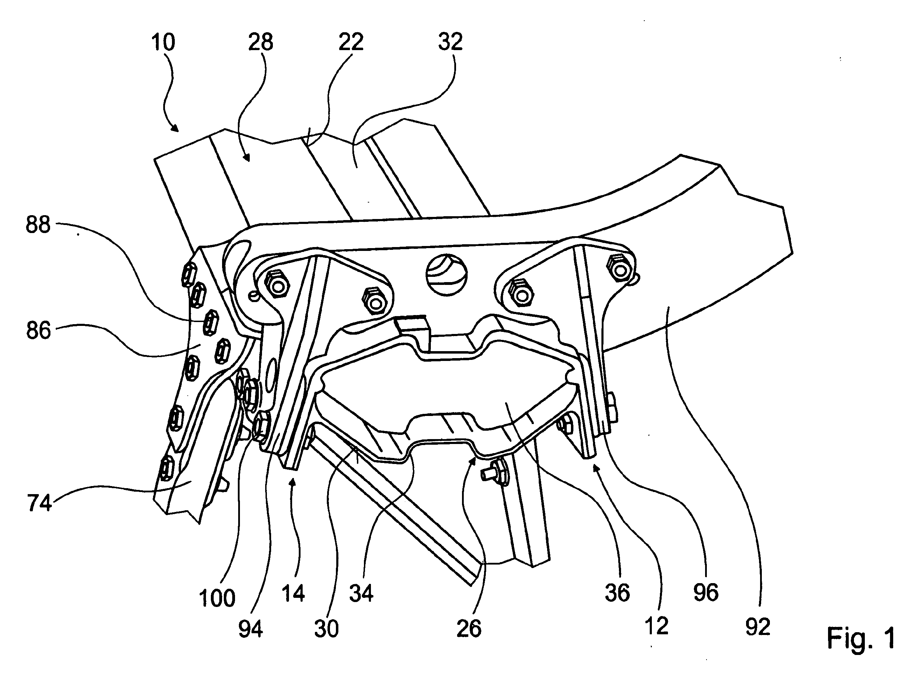

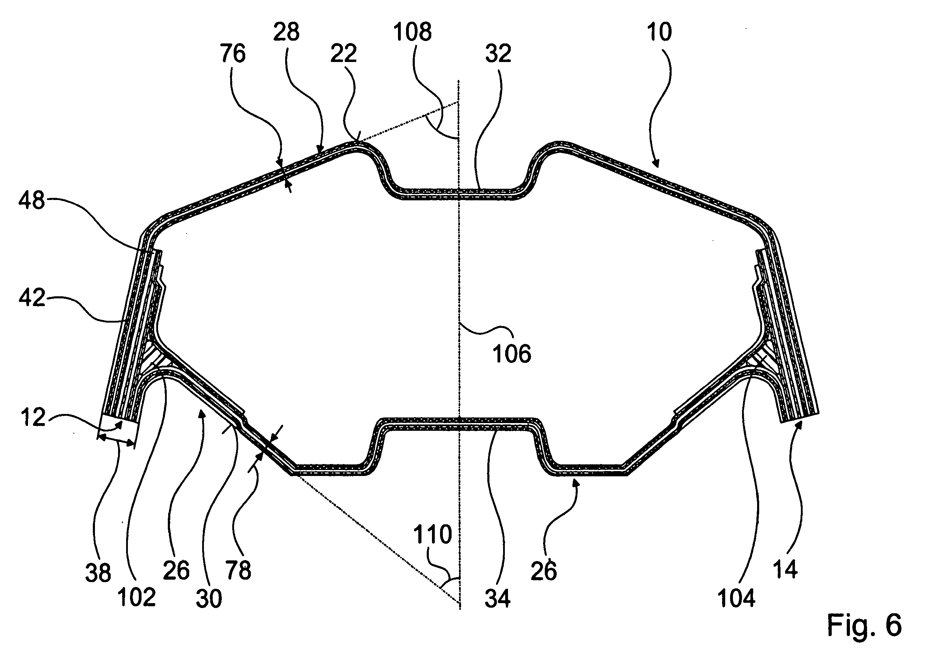

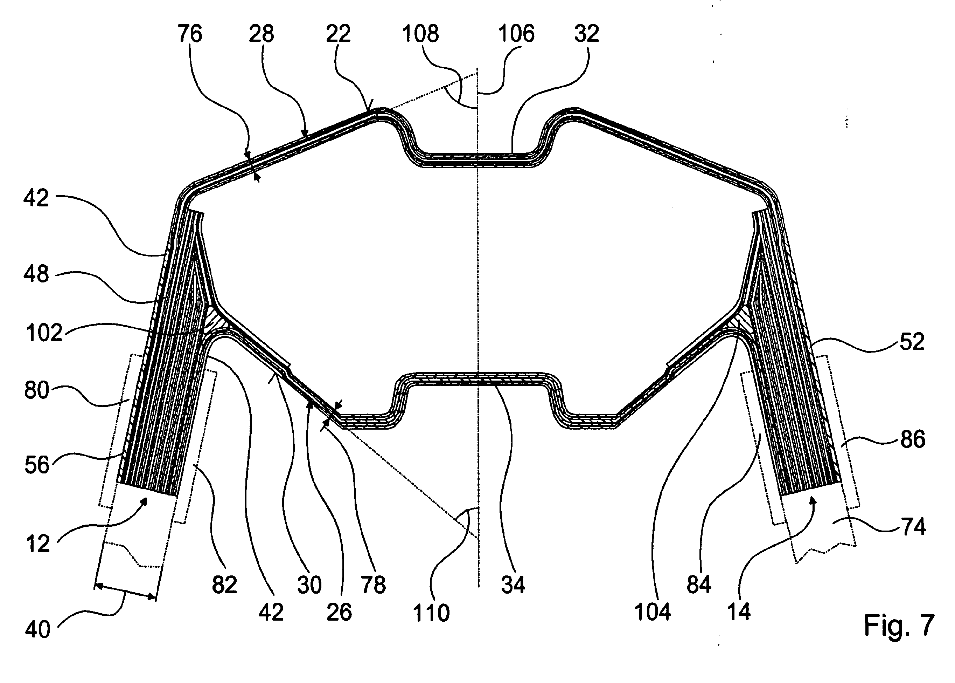

Figur 1 zeigt einen Ausschnitt einer Sitzstützvorrichtung mit einem einzelnen, von einer Sitztragbalkeneinheit 10 gebildeten Querträger zur Abstützung von insgesamt drei in einer Reihe befindlichen Flugzeugsitzen auf einem Kabinenboden eines Flugzeugs. Die Sitztragbalkeneinheit 10 weist zwei zu einem Hohlprofil mittels einer Klebeverbindung 48 zusammengefügte halbschalenartige Grundkörperelemente 26 auf, wobei das - in der Einbaulage betrachtet - untere halbschalenartige Grundkörperelement 26 in das - in der Einbaulage betrachtet - obere halbschalenartige Grundkörperelement 28 eingeschoben ist (Figuren 6 und 7).

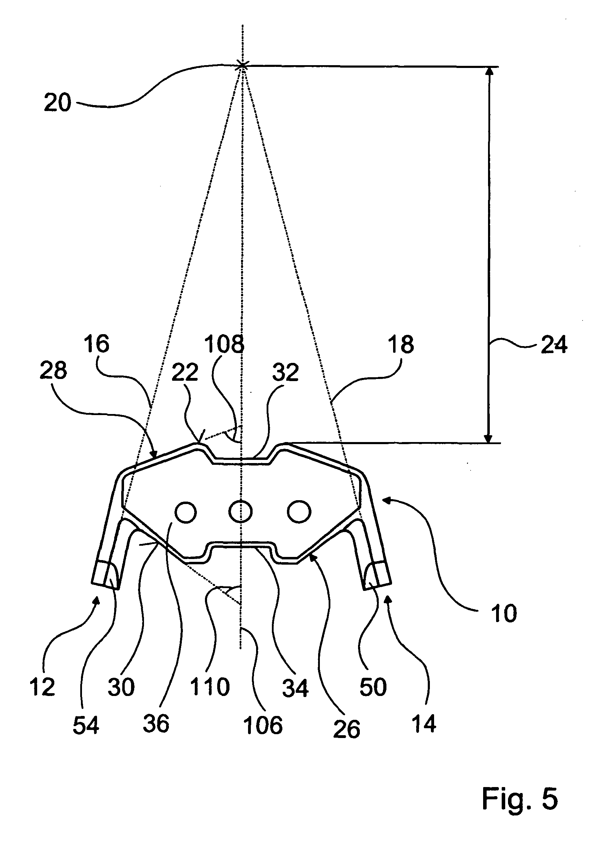

An die durch kohlefaserverstärkte Kunststoffeinlegematten 42 hergestellten, mehrschichtigen Grundkörperelemente 26, 28 sind zur Aufnahme eines Drehmoments zwei sich über die gesamte Länge der Sitztragbalkeneinheit 10 erstreckende, stegartige, mehrschichtig aufgebaute Kraftaufnahmeelemente 12, 14 einstückig angeformt, deren Längsachsen 16, 18 sich in einem Schnittpunkt 20 oberhalb einer Deckseite 22 der Sitztragbalkeneinheit 10 im Bereich eines sich wahrscheinlich einstellenden Schwerpunkts bei besetzten Flugzeugsitzen schneiden und damit ein vorteilhaftes Dreieck zur Aufnahme des Drehmoments bilden (Figur 5). Der Schnittpunkt 20 befindet sich zwischen einer nicht näher dargestellten Sitzbodenoberfläche der Flugzeugsitze und einer Oberkante einer ebenfalls nicht dargestellten Rückenlehne der Flugzeugsitze bzw. dieser weist einen Vertikalabstand 24 von ca. 40 cm zur Deckseite 22 der Sitztragbalkeneinheit 10 auf. Abhängig von verschiedenen Randbedingungen sind jedoch auch andere Vertikalabstände denkbar.

Die Kraftaufnahmeelemente 12, 14 sind zu einer Unterseite 30 des Grundkörperelements 26 der Sitztragbalkeneinheit 10 überstehend ausgeführt. Die Sitztragbalkeneinheit 10 ist - in der Einbaulage betrachtet - im Wesentlichen zu ihrer vertikal verlaufenden Mittelachse 106, die die Längsachsen 16, 18 ebenfalls im Schnittpunkt 20 schneidet, spiegelsymmetrisch ausgebildet (Figur 5). Sich im Wesentlichen an die Kraftaufnahmeelemente 12, 14 anschließende Wandungen des Grundkörperelements 28 sind zur Mittelachse 106 schräg ausgerichtet bzw. schließen zu dieser einen Winkel 108 von ca. 70° ein. Sich im Wesentlichen an die Kraftaufnahmeelemente 12, 14 anschließende Wandungen des Grundkörperelements 26 sind ebenfalls zur Mittelachse 106 schräg ausgerichtet bzw. schließen zu dieser einen Winkel 110 von ca. 50° ein. Grundsätzlich sind jedoch auch andere, dem Fachmann als sinnvoll erscheinende Winkel, insbesondere zwischen 10° und 80°, denkbar.

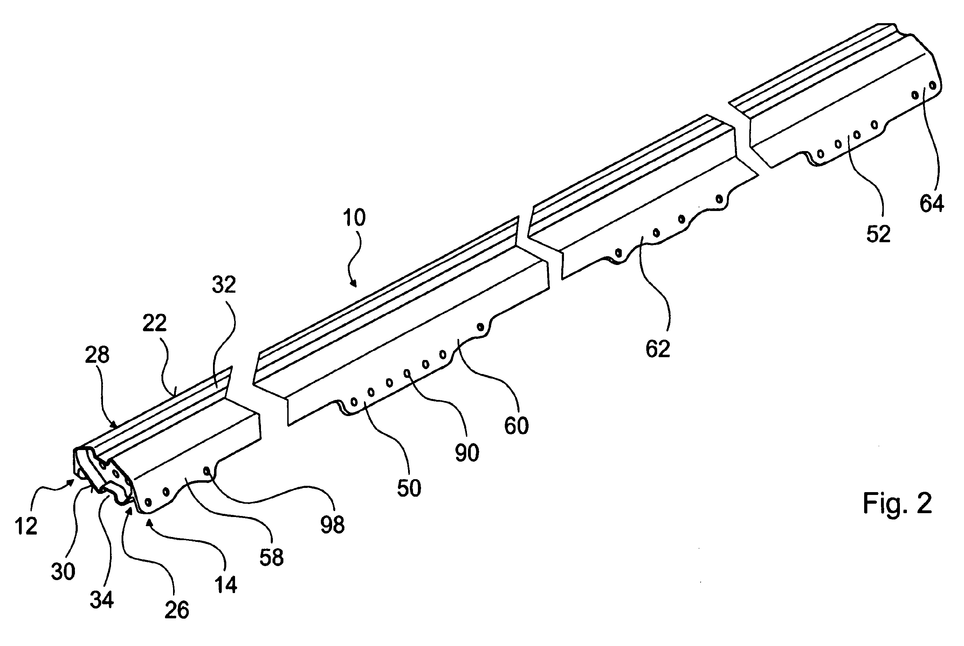

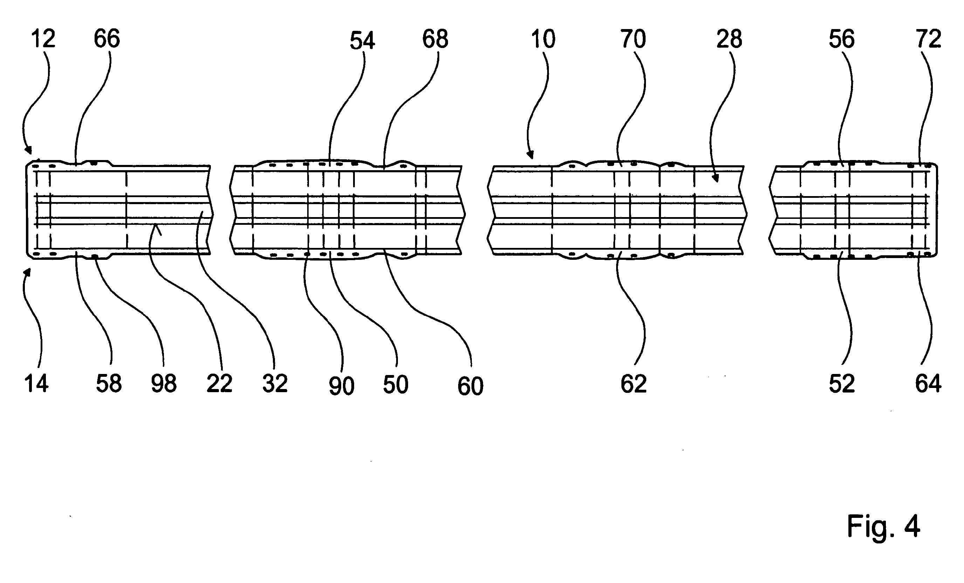

Die Kraftaufnahmeelemente 12, 14 weisen jeweils zwei Koppelbereiche 50, 52, 54, 56 zur Befestigung von Ständerbeinen 74 auf (Figuren 1 bis 5). Ferner weisen die Kraftaufnahmeelemente 12, 14 jeweils vier Koppelbereiche 58, 60, 62, 64, 66, 68, 70, 72 zur Befestigung von Armlehnen bildenden Sitzteiler 92 auf.

Zwischen den Koppelbereichen 50 bis 72 weisen die Kraftaufnahmeelemente 12, 14 Materialwandstärken 38 auf, die ca. 3,5 mal so groß sind wie eine Materialwandstärke 76, 78 der Grundkörperelemente 26, 28 in Bereichen außerhalb der Kraftaufnahmeelemente 12, 14 (Figur 6). In den Koppelbereichen 58 bis 72 zur Befestigung der die Armlehnen bildenden Sitzteiler 92 weisen die Kraftaufnahmeelemente 12, 14 im Wesentlichen die gleichen Materialwandstärken auf wie zwischen den Koppelbereichen 50 bis 72, jedoch sind die Kraftaufnahmeelemente 12, 14 in den Koppelbereichen 58 bis 72 im Vergleich zu den Bereichen zwischen den Koppelbereichen 50 bis 72 grundsätzlich länger ausgeführt. In den Koppelbereichen 50 bis 56 zur Befestigung der Ständerbeine 74 weisen die Kraftaufnahmeelemente 12, 14 Materialwandstärken 40 auf, die ca. 2 mal so groß sind wie die Materialwandstärke 38 im Bereich zwischen den Koppelbereichen 50 bis 72 bzw. in den Koppelbereichen 58 bis 72. Ferner sind die Kraftaufnahmeelemente 12, 14 in den Koppelbereichen 50 bis 56 wiederum länger ausgeführt als in den Koppelbereichen 58 bis 72 (Figuren 1 bis 7).

Die Ständerbeine 74 weisen an die Kraftaufnahmeelemente 12, 14 in den Koppelbereichen 50 bis 56 in Sitzrichtung an jeder Seite angrenzende Befestigungsplatten 80, 82, 84, 86 auf, wie dies insbesondere in Figur 7 angedeutet ist und von denen eine in Figur 1 zu erkennen ist. Die Befestigungsplatten 80, 82, 84, 86 sind mit durch die Koppelbereiche 50 bis 56 bzw. durch Bohrungen 90 der Kraftaufnahmeelemente 12, 14 durchgreifenden Befestigungsschrauben 88 gegen die Kraftaufnahmeelemente 12, 14 verspannt. Die die Armlehnen bildenden Sitzteiler 92 weisen dagegen an die Kraftaufnahmeelemente 12, 14 in den Koppelbereichen 58 bis 72 in Sitzrichtung jeweils nur an einer Seite angrenzende Befestigungsplatten 94, 96 auf (Figur 1), die mit durch die Koppelbereiche 58 bis 72 bzw. durch Bohrungen 98 der Kraftaufnahmeelemente 12, 14 durchgreifenden Befestigungsschrauben 100 gegen die Kraftaufnahmeelemente 12, 14 verspannt sind.

Zur Erzielung von vorteilhaften Formschlussverbindungen ist zudem an das in der Einbaulage betrachtete obere Grundkörperelement 28 an dessen Deckseite 22 eine Ausformung 32 angeformt, die von einer sich über die gesamte Länge der Sitztragbalkeneinheit 10 erstreckenden Nut gebildet ist (Figuren 1 bis 7). Ferner ist an das in der Einbaulage betrachtete untere Grundkörperelement 26 an dessen Unterseite 30 eine Ausformung 34 angeformt, die ebenfalls von einer sich über die gesamte Länge der Sitztragbalkeneinheit 10 erstreckenden Nut gebildet ist.

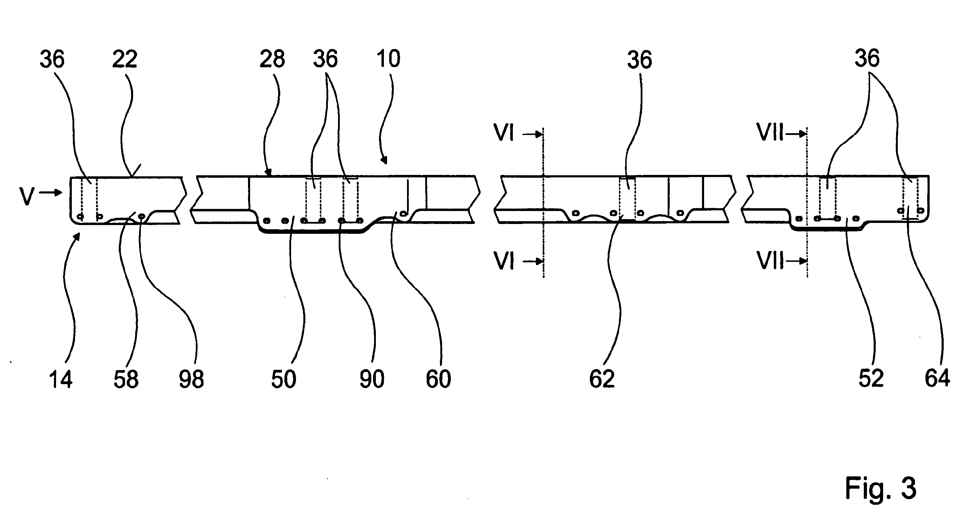

Um Ausbeulungen im Bereich der Koppelbereiche 50 bis 56 zu vermeiden, sind insbesondere in diesen Bereichen zwischenwandartige, quer zur Längsrichtung der Sitztragbalkeneinheit 10 verlaufende Versteifungsmittel 36 an das in der Einbaulage betrachtete untere Grundkörperelement 26 einstückig angeformt (Figuren 1 und 3).

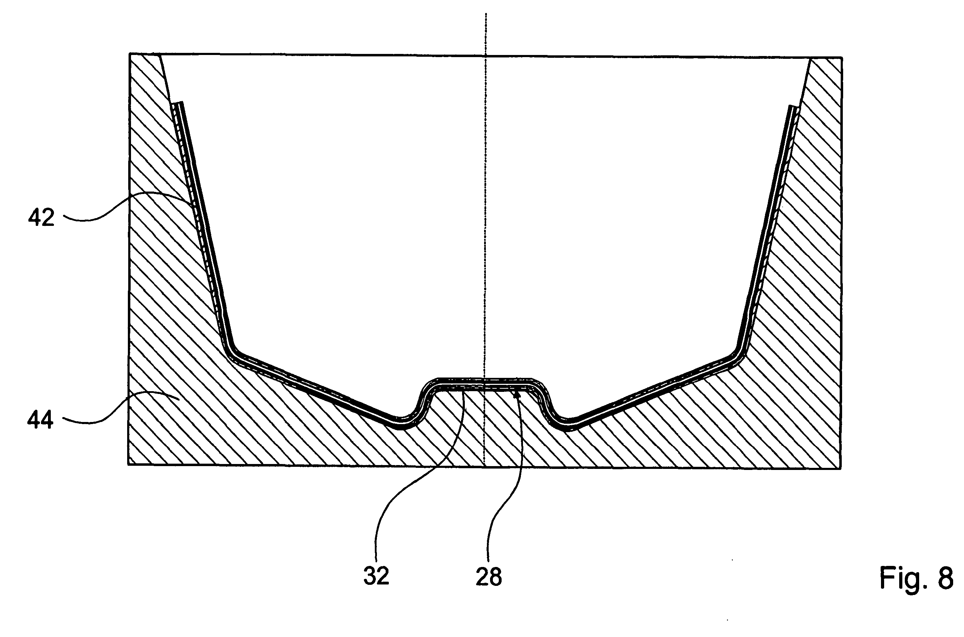

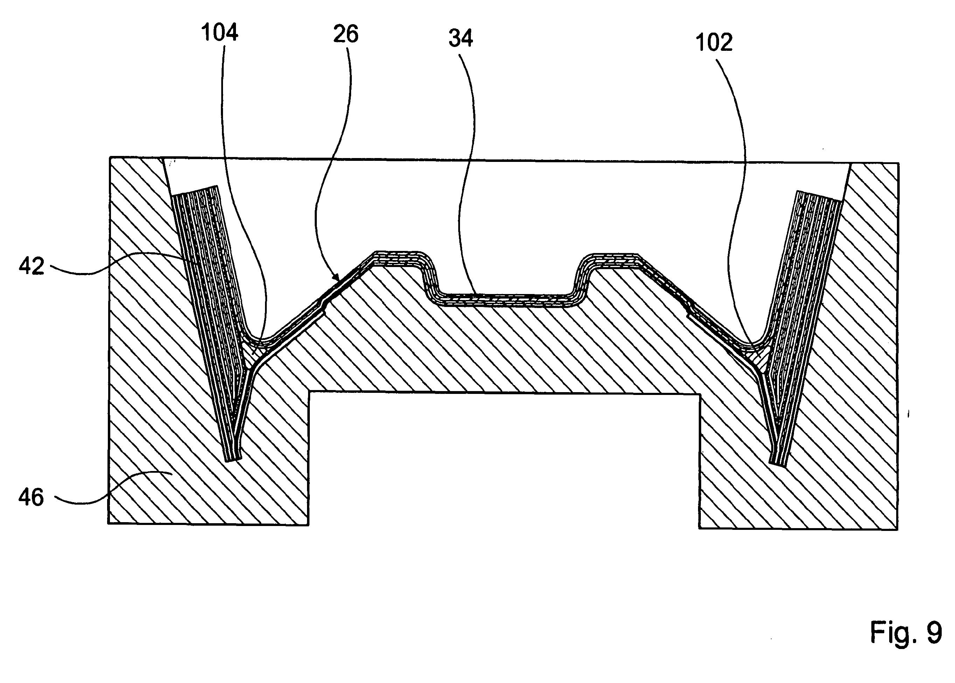

In den Figuren 8 und 9 ist die Sitztragbalkeneinheit 10 bei der Herstellung gezeigt. Dabei werden kohlefaserverstärkte Kunststoffeinlegematten 42 in eine Form 44 zur Herstellung des oberen Grundkörperelements 28 und kohlefaserverstärkte Kunststoffeinlegematten 42 in eine Form 46 zur Herstellung des unteren Grundkörperelements 26 eingelegt. Zur Erzielung unterschiedlicher Materialwandstärken 38, 40, 76, 78, insbesondere auch zur Erzielung der unterschiedlichen Materialwandstärken 38, 40 der Kraftaufnahmeelemente 12, 14, werden in unterschiedlichen Bereichen unterschiedlich viele kohlefaserverstärkte Kunststoffeinlegematten 42 eingelegt. Ferner werden die kohlefaserverstärkten Kunststoffeinlegematten 42 bezüglich ihrer Faserausrichtungen in verschiedenen Bereichen unterschiedlich ausgerichtet eingelegt, um eine Anpassung der Sitztragbalkeneinheit 10 an im Betrieb in den verschiedenen Bereichen auftretende verschiedene Belastungen anzupassen. Um in seitlichen Eckbereichen des - in der Einbaulage betrachtet - unteren Grundkörperelements 26 einen Freiraum möglichst zu vermeiden, ist in den Eckbereichen jeweils ein im Querschnitt im Wesentlichen dreieckiger Einlegekörper 102, 104 eingelegt.

**Bezugszeichen**

| | | | |
|---|---|---|---|
| 10 | Sitztragbalkeneinheit | 62 | Koppelbereich |
| 12 | Kraftaufnahmeelement | 64 | Koppelbereich |
| 14 | Kraftaufnahmeelement | 66 | Koppelbereich |
| 16 | Längsachse | 68 | Koppelbereich |
| 18 | Längsachse | 70 | Koppelbereich |
| 20 | Schnittpunkt | 72 | Koppelbereich |
| 22 | Deckseite | 74 | Ständerbein |
| 24 | Vertikalabstand | 76 | Materialwandstärke |
| 26 | Grundkörperelement | 78 | Materialwandstärke |
| 28 | Grundkörperelement | 80 | Befestigungsplatte |
| 30 | Unterseite | 82 | Befestigungsplatte |
| 32 | Ausformung | 84 | Befestigungsplatte |
| 34 | Ausformung | 86 | Befestigungsplatte |
| 36 | Versteifungsmittel | 88 | Befestigungsschraube |
| 38 | Materialwandstärke | 90 | Bohrung |
| 40 | Materialwandstärke | 92 | Sitzteiler |
| 42 | Einlegematten | 94 | Befestigungsplatte |
| 44 | Form | 96 | Befestigungsplatte |
| 46 | Form | 98 | Bohrung |
| 48 | Klebeverbindung | 100 | Befestigungsschraube |
| 50 | Koppelbereich | 102 | Einlegekörper |
| 52 | Koppelbereich | 104 | Einlegekörper |
| 54 | Koppelbereich | 106 | Mittelachse |
| 56 | Koppelbereich | 108 | Winkel |
| 58 | Koppelbereich | 110 | Winkel |
| 60 | Koppelbereich | | |

## Patentansprüche

1. Sitzstützvorrichtung mit einer Sitztragbalkeneinheit (10), die zur Aufnahme eines Drehmoments, welches sich im Wesentlichen aus einer Massenträgheitskraft einer Gewichtskraft eines Passagiers oder mehrerer nebeneinander sitzender Passagiere mal einem Hebelarm zwischen einem sich oberhalb zumindest einer Deckseite (22) der Sitztragbalkeneinheit (10) befindlichen Massenschwerpunkt des bzw. der Passagiere und der Sitztragbalkeneinheit (10) ergibt, zumindest zwei Kraftaufnahmeelemente (12, 14) aufweist, die jeweils Koppelbereiche (50, 52, 54, 56) zur Befestigung von Ständerbeinen (74) aufweisen, wobei Längsachsen (16, 18) der Kraftaufnahmeelemente (12, 14) sich in einem Schnittpunkt (20) oberhalb der Deckseite (22) der Sitztragbalkeneinheit (10) schneiden, wodurch das Drehmoment zumindest weitgehend in den Kraftaufnahmeelementen (12, 14) durch Axialkräfte abgestützt werden kann.

2. Sitzstützvorrichtung nach Anspruch 1,
**dadurch gekennzeichnet,**
**dass** - in der Einbaulage betrachtet - der Schnittpunkt (20) einen Vertikalabstand (24) zur Deckseite (22) kleiner 150 cm aufweist.

3. Sitzstützvorrichtung nach Anspruch 1 oder 2,
**dadurch gekennzeichnet,**
**dass** die Ständerbeine (74) mit den Kraftaufnahmeelementen (12, 14) durch Befestigungsplatten (80, 82, 84, 86) verspannbar sind.

4. Sitzstützvorrichtung nach einem der vorhergehenden Ansprüche,
**dadurch gekennzeichnet,**
**dass** wenigstens ein Kraftaufnahmeelement (12, 14) zu einer Außenseite eines Grundkörperelements (26) der Sitztragbalkeneinheit (10) überstehend ausgeführt ist.

5. Sitzstützvorrichtung nach Anspruch 4,
**dadurch gekennzeichnet,**
**dass** wenigstens ein Kraftaufnahmeelement (12, 14) über eine Unterseite (30) des Grundkörperelements (26) der Sitztragbalkeneinheit (10) überstehend ausgeführt ist.

6. Sitzstützvorrichtung nach einem der vorhergehenden Ansprüche,
**dadurch gekennzeichnet,**
**dass** wenigstens ein Kraftaufnahmeelement (12, 14) zumindest teilweise einstückig an ein Grundkörperelement (26, 28) der Sitztragbalkeneinheit (10) angeformt ist.

7. Sitzstützvorrichtung nach einem der vorhergehenden Ansprüche,
**dadurch gekennzeichnet,**
**dass** die Sitztragbalkeneinheit (10) wenigstens eine für einen Formschluss vorgesehene Ausformung (32, 34) aufweist.

8. Sitzstützvorrichtung nach einem der vorhergehenden Ansprüche,
**dadurch gekennzeichnet,**
**dass** die Sitztragbalkeneinheit (10) zumindest teilweise von einem Hohlprofil gebildet ist.

9. Sitzstützvorrichtung nach Anspruch 8,
**gekennzeichnet durch**
wenigstens ein innerhalb des Hohlprofils angeordnetes Versteifungsmittel (36).

10. Sitzstützvorrichtung nach einem der vorhergehenden Ansprüche,
**dadurch gekennzeichnet,**
**dass** die Sitztragbalkeneinheit (10) von wenigstens zwei Grundkörperelementen (26, 28) gebildet ist.

11. Sitzstützvorrichtung nach einem der vorhergehenden Ansprüche,
**dadurch gekennzeichnet,**
**dass** wenigstens ein Grundkörperelement (26) der Sitztragbalkeneinheit (10) unterschiedlich große Materialwandstärken (38, 40) aufweist.

12. Sitzstützvorrichtung nach einem der vorhergehenden Ansprüche,
**dadurch gekennzeichnet,**
**dass** die Sitztragbalkeneinheit (10) zumindest teilweise aus einem Faserwerkstoff gebildet ist.

13. Sitzstützvorrichtung nach Anspruch 12,
**dadurch gekennzeichnet,**
**dass** die Sitztragbalkeneinheit (10) durch mehrere Einlegematten (42) hergestellt ist.

14. Sitzvorrichtung mit einer Sitzstützvorrichtung nach einem der vorhergehenden Ansprüche und wenigstens einem Sitz.

## Claims

1. Seat support apparatus having a seat-supporting beam unit (10) which has at least two force-absorbing elements (12, 14) for absorbing a torque which substantially arises from a mass force of inertia from the weight of a passenger or of a plurality of passengers sitting next to one another times a lever arm between a mass centre of gravity of the passenger or the passengers and the seat-supporting beam unit (10), which mass centre of gravity is situated above at least one top side (22) of the seat-supporting beam unit (10), each of which force-absorbing elements having coupling regions (50, 52, 54, 56) for securing support legs (74), wherein longitudinal axes (16, 18) of the force-absorbing elements (12, 14) intersect in an intersecting point (20) above the top side (22) of the seat-supporting beam unit (10), with the result that the torque can be at least largely supported in the force-absorbing elements (12, 14) by axial forces.

2. Seat support apparatus according to Claim 1, **characterized in that** - as viewed in the fitted position - the intersecting point (20) has a vertical distance (24) from the top side (22) of smaller than 150 cm.

3. Seat support apparatus according to Claim 1 or 2, **characterized in that** the support legs (74) can be braced with the force-absorbing elements (12, 14) by means of securing plates (80, 82, 84, 86).

4. Seat support apparatus according to one of the preceding claims, **characterized in that** at least one force-absorbing element (12, 14) is designed such that it protrudes with respect to an outer side of a basic body element (26) of the seat-supporting beam unit (10).

5. Seat support apparatus according to Claim 4, **characterized in that** at least one force-absorbing element (12, 14) is designed such that it protrudes over an underside (30) of the basic body element (26) of the seat-supporting beam unit (10).

6. Seat support apparatus according to one of the preceding claims, **characterized in that** at least one force-absorbing element (12, 14) is moulded, at least partially integrally, onto a basic body element (26, 28) of the seat-supporting beam unit (10).

7. Seat support apparatus according to one of the preceding claims, **characterized in that** the seat-supporting beam unit (10) has at least one moulding (32, 34) provided for an interlocking connection.

8. Seat support apparatus according to one of the preceding claims, **characterized in that** the seat-supporting beam unit (10) is at least partially formed by a hollow profile.

9. Seat support apparatus according to Claim 8, **characterized by** at least one stiffening means (36) arranged within the hollow profile.

10. Seat support apparatus according to one of the preceding claims, **characterized in that** the seat-supporting beam unit (10) is formed by at least two basic body elements (26, 28).

11. Seat support apparatus according to one of the preceding claims, **characterized in that** at least one basic body element (26) of the seat-supporting beam unit (10) has material wall thicknesses (38, 40) differing in size.

12. Seat support apparatus according to one of the preceding claims, **characterized in that** the seat-supporting beam unit (10) is at least partially formed from a fibre material.

13. Seat support apparatus according to Claim 12, **characterized in that** the seat-supporting beam unit (10) is produced by a plurality of insert mats (42).

14. Seat apparatus having a seat support apparatus according to one of the preceding claims and at least one seat.

## Revendications

1. Dispositif de support pour siège, comprenant une unité de barre de support de siège (10) qui comprend au moins deux éléments de reprise de force (12, 14) pour la reprise d'un couple qui résulte essentiellement de la multiplication d'une force d'inertie de masse du poids d'un passager ou de plusieurs passagers assis les uns à côté des autres par un bras de levier entre un centre de masse, se trouvant au-dessus d'au moins un côté de recouvrement (22) de l'unité de barre de support de siège (10), du ou des passagers et l'unité de barre de support de siège (10), lesquels éléments de reprise de force comprennent respectivement des régions d'accouplement (50, 52, 54, 56) pour la fixation de jambes de support (74), des axes longitudinaux (16, 18) des éléments de reprise de force (12, 14) s'intersectant en un point d'intersection (20) au-dessus du côté de recouvrement (22) de l'unité de barre de support de siège (10), de sorte que le couple soit, au moins dans une large mesure, supporté par des forces axiales dans les éléments de reprise de force (12, 14).

2. Dispositif de support pour siège selon la revendication 1,
**caractérisé en ce que**,
considéré dans la position d'installation, le point d'intersection (20) est situé à une distance verticale (24) par rapport au côté de recouvrement (22) qui est inférieure à 150 cm.

3. Dispositif de support pour siège selon la revendication 1 ou 2,
**caractérisé en ce que**
les jambes de support (74) peuvent être serrées avec les éléments de reprise de force (12, 14) par des plaques de fixation (80, 82, 84, 86).

4. Dispositif de support pour siège selon l'une quelconque des revendications précédentes,
**caractérisé en ce**
**qu'**au moins un élément de reprise de force (12, 14) est réalisé en saillie par rapport à un côté extérieur d'un élément de corps de base (26) de l'unité de barre de support de siège (10).

5. Dispositif de support pour siège selon la revendication 4,
**caractérisé en ce**
**qu'**au moins un élément de reprise de force (12, 14) est réalisé en saillie au-delà d'un côté inférieur (30) de l'élément de corps de base (26) de l'unité de barre de support de siège (10).

6. Dispositif de support pour siège selon l'une quelconque des revendications précédentes,
**caractérisé en ce**
**qu'**au moins un élément de reprise de force (12, 14) est formé au moins partiellement d'un seul tenant sur un élément de corps de base (26, 28) de l'unité de barre de support de siège (10).

7. Dispositif de support pour siège selon l'une quelconque des revendications précédentes,
**caractérisé en ce que**
l'unité de barre de support de siège (10) comprend au moins une formation (32, 34) prévue pour un engagement positif.

8. Dispositif de support pour siège selon l'une quelconque des revendications précédentes,
**caractérisé en ce que**
l'unité de barre de support de siège (10) est formée au moins partiellement par un profilé creux.

9. Dispositif de support pour siège selon la revendication 8,
**caractérisé par**
au moins un moyen de rigidification (36) disposé à l'intérieur du profilé creux.

10. Dispositif de support pour siège selon l'une quelconque des revendications précédentes,
**caractérisé en ce que**
l'unité de barre de support de siège (10) est formée par au moins deux éléments de corps de base (26, 28).

11. Dispositif de support pour siège selon l'une quelconque des revendications précédentes,
**caractérisé en ce**
**qu'**au moins un élément de corps de base (26) de l'unité de barre de support de siège (10) présente des épaisseurs de paroi de matériau (38, 40) de dimensions différentes.

12. Dispositif de support pour siège selon l'une quelconque des revendications précédentes,
**caractérisé en ce que**
l'unité de barre de support de siège (10) est formée au moins partiellement à partir d'un matériau de fibres.

13. Dispositif de support pour siège selon la revendication 12,
**caractérisé en ce que**
l'unité de barre de support de siège (10) est fabriquée au moyen de plusieurs nattes d'insertion (42).

14. Dispositif d'assise comprenant un dispositif de support pour siège selon l'une quelconque des revendications précédentes ainsi qu'au moins un siège.
